Europäisches Patentamt

European Patent Office

Office européen des brevets

(19)

(11) Publication number : **0 259 135 B1**

(12)

# EUROPEAN PATENT SPECIFICATION

(45) Date of publication of patent specification :
**09.11.94 Bulletin 94/45**

(51) Int. Cl.⁵ : **G06F 15/16, G06F 13/14**

(21) Application number : **87307695.4**

(22) Date of filing : **01.09.87**

(54) **A method and apparatus for arbitration and serialization in a multiprocessor system.**

(30) Priority : **02.09.86 US 902497**

(43) Date of publication of application :
**09.03.88 Bulletin 88/10**

(45) Publication of the grant of the patent :
**09.11.94 Bulletin 94/45**

(84) Designated Contracting States :
**DE FR GB IT**

(56) References cited :
**EP-A- 0 032 864**
**EP-A- 0 103 803**
**EP-A- 0 184 657**
**EP-A- 0 185 370**

(73) Proprietor : **AMDAHL CORPORATION**
**1250 East Arques Avenue**
**Sunnyvale California 94086 (US)**

(72) Inventor : **Vahidsafa, Ali**
**Senzoku Homes 101**
**2-6-16 Senzoku**
**Meguro-ku Tokyo 152 (JP)**
Inventor : **Magee, Kristin**
**2069 Clark Avenue**
**Santa Clara California 95051 (US)**
Inventor : **Begley, Michael J.**
**1771 Sageland Drive**
**San Jose California 95131 (US)**

(74) Representative : **Crawford, Andrew Birkby et al**
**A.A. THORNTON & CO.**
**Northumberland House**
**303-306 High Holborn**
**London WC1V 7LE (GB)**

## Description

The present invention relates to multiprocessor systems in general and to a method and apparatus for arbitration between and serialization of plural processors in a multiprocessor system in particular.

Description of Prior Art

A multiprocessor system comprises a plurality of processors which are coupled to each other directly or indirectly through one or more other processors. The coupling of processors in such a system comprises the coupling of data and/or control signal buses of one processor and corresponding data and/or control signal buses of one or more other processors in the system. For example, in a multiprocessor system comprising four processors designated first, second, third and fourth, respectively, the processors may be coupled in an arrangement such that the first processor is coupled directly to the second processor and indirectly through the second processor to the third and fourth processors; the second processor is coupled directly to the first and third processors and indirectly through the third processor to the fourth processor; the third processor is coupled directly to the second and fourth processor and indirectly through the second processor to the first processor; and the fourth processor is coupled directly to the third processor and indirectly through the third processor to the second and first processor.

In operation, a central processing unit (CPU) in the system in the course of executing instructions may encounter instructions which require it to request special operations of the other CPU's in the system. For example, some instructions have a requirement that when executed on a CPU the results produced by instructions previously executed on the CPU must be available and visible to other CPUs and channels in the system before the results of the current instruction. Specific results of prior instructions which must be available to other CPU's and channels before the results of a current instruction include storage accesses and translation lookaside buffer purge orders. Such an instruction, executed on the requesting CPU, must initiate operations on all other CPU's before the unit of operation on the requesting CPU is completed. A unit of operation is defined as a predetermined amount of work that cannot be interrupted. Furthermore, the operations initiated on each of the other CPU's in the system must be initiated between units of operation on those CPU's. The operations initiated on each of the nonrequesting CPU's, which place all nonrequesting CPU's in a predetermined state, are collectively known as serialization.

In general, the serialization of a processor in a multiprocessor system comprises forcing the processor to complete certain operations and forcing the processor to a state where it will not initiate new operations. For example, operations which are completed during serialization of a processor are specific to each processor, but typically include completing the current unit of operation, completing stores to system memory and local processor caches, and completing any pending updates to local processor translation lookaside buffers.

At times, more than one processor in a multiprocessor system may request serialization of another processor in the system at the same time. When this occurs, the requesting processors must be awarded priority according to a predetermined scheme. The awarding of priority is called arbitration.

EP-A-0032864 describes a system having a plurality of data processing units where each such unit has a priority awarding circuit. Requests for access to a common transmission bus are interchanged between all units in the system and each unit has the same priority circuit such that priority is awarded in the same manner in each unit. EP-A-0184657 describes how transmission time differences in transmitting a synchronising signal to different parts of a system may be approximately compensated for. The output of the signal is variously delayed according to which part of the system is the intended recipient.

Principal objects of the present invention are a novel method and apparatus for arbitration between and serialization of plural central processing units (CPU's) in a multi-processor system.

The present invention provides a control apparatus and method thereof in each distributed central processing unit (CPU) within a distributed multiprocessor system comprising a plurality of distributed CPUs which process data in response to instructions, said control apparatus comprising:

request means responsive to a predetermined instruction for generating a REQUEST signal to request serialization of all said distributed CPUs;

transmitting means connected to said request means for transmitting said REQUEST signal to all other said distributed CPUs; and

priority means connected to receive REQUEST signals generated by all said distributed CPUs for awarding priority to one of said REQUEST signals when a plurality of REQUEST signals are simultaneously received by said priority means;

characterized by further comprising receiving means having a plurality of inputs where each input receives REQUEST signals from a respective one of said distributed CPUs, a plurality of delays where each delay is connected to one of said inputs for compensating for the transmission time associated with transmitting REQUEST signals from the respective transmitting distributed CPU, and a plurality of outputs where each output is connected to a respective one of said delays and to said priority means; whereby REQUEST signals appearing at said outputs of said receiving means are in the same time relationship as that in which said REQUEST signals were generated by said distributed CPUs.

The magnitude of the delay provided by each delay provided by each delay circuit is chosen to be inversely proportional to the time it takes to transmit a REQUEST from a CPU in the system to the input of the priority circuit to which the delay circuit is coupled.

As described above the delay means comprises a selector circuit for selecting the amount of delay to be placed in series with an input of a priority circuit. For example, if for purposes of repair or replacement, CPU's are moved within the system or a CPU is replaced in the system, a simple setting of the selector circuit which depends on the location of the delay network in the system is all that is required for providing the required amount of delay in the delay network. Also, if the system is reconfigured from a multiprocessor system to a dual processor or uniprocessor, advantage can be taken of the decrease in the amount of delay needed.

In operation, if a CPU requires serialization of another CPU in the system, it generates a REQUEST for permission to serialize the other CPU's and sends it to all of the other CPU's in the system. If a plurality of CPU's generate simultaneous REQUEST's, the priority circuit in each of the CPU's awards priority to one of the CPU's. Since the priority circuits in all of the CPU's are identical, each of them makes the same decision and therefore, there is no need to transmit the decision to the other CPU's. The CPU awarded priority then performs a local serialization operation, generates an ORDER ordering the other CPU's to serialize themselves and drops its REQUEST. The dropping of the REQUEST allows one of the other requesting CPU's to be awarded priority while it and the other CPU's are being serialized. While an ORDER is pending, however, no other CPU will issue an ORDER. As each nonrequesting CPU completes its serialization, it generates an ACK control signal indicating that it has completed its serialization. When the requesting CPU issuing an ORDER has received the ACK signals indicating that all of the other CPU's have completed their serialization and the requesting CPU has completed its serialization, a control signal is sent to the instruction processor, the requesting CPU completes the task which gave rise to its REQUEST and drops its ORDER. Thereafter, the next CPU then having priority performs a local serialization operation, issues its ORDER and the above-described process is repeated.

At times a CPU executes an instruction or group of instructions, the execution of which cannot be interrupted. To prevent another CPU in the system from making a REQUEST and being awarded priority, the former CPU makes and holds a REQUEST until it completes its execution of the instruction or the group of instructions. In this manner, the method and apparatus of the present invention is able to prevent disruptive interruptions of specific instructions without resorting to more expensive hardware or software implementations heretofore required.

## Brief Description of the Drawing

The above and other objects, features and advantages of the present invention will become apparent from the following detailed description of the accompanying drawing in which:

Fig. 1 is a block diagram of a multiprocessor system comprising four central processing units according to the present invention;

Fig. 2 is a more detailed block diagram of one of the central processing units of Fig. 1;

Fig. 3 is a block diagram of one embodiment of fixed delay networks and priority circuits in the central processing units of Fig. 1; and

Figs. 4-7 are block diagrams of an embodiment of programmable delay networks and priority circuits in the central processing units of Fig. 1.

## Detailed Description of the Drawing

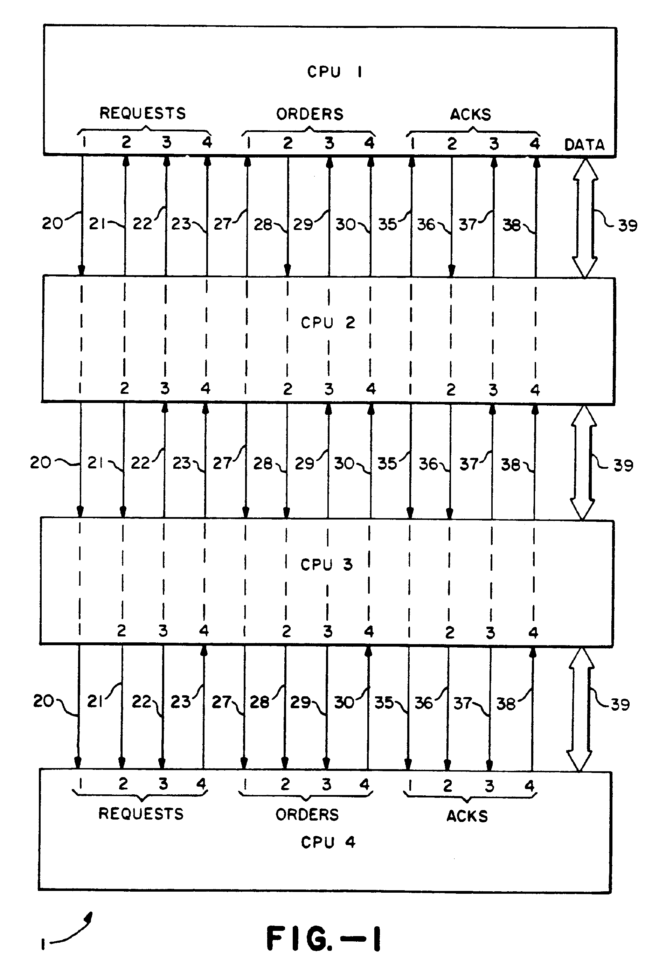

Referring to Fig. 1, there is provided in accordance with the present invention a multiprocessor system designated generally as 1. In the system 1 there is provided a plurality of central processing units (CPU's) designated generally as CPU 1, CPU 2, CPU 3 and CPU 4. All of the CPU's are interconnected by a plurality of REQUEST signal lines 20-23, ORDER signal lines 27-30, and acknowledge (ACK) signal lines 35-38. A plurality of broken lines are used to show that signals on each of the lines pass through CPU's 2 and 3 to adjacent CPU's after being latched and synchronized with system clocks located therein.

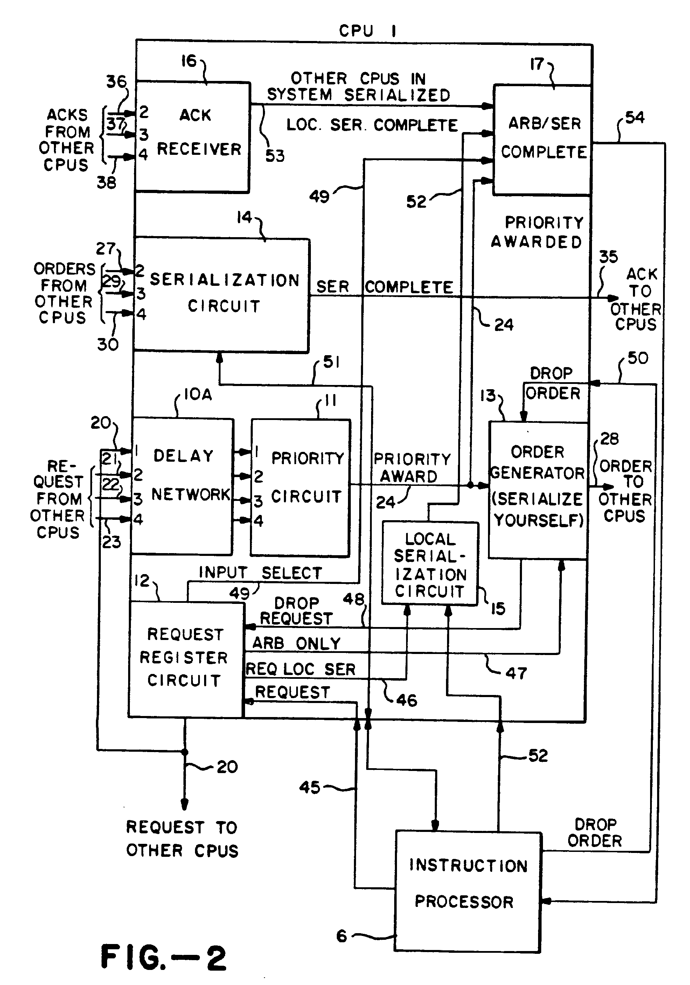

In each of the CPU's 1-4, as seen more clearly in Fig. 2 which is a block diagram of CPU 1 and typical of the other CPU's, there is provided an instruction processor 6, a priority circuit 11, a request register circuit 12, an order generator 13, a serialization circuit 14, a local serialization circuit 15, an ACK receiver 16 and an arbitration/serialization (ARB/SER) complete circuit 17. In addition, there is provided in the CPU's 1-4, a plurality of delay networks 10A, 10B, 10C and 10D, respectively.

As will be further described below, each of the delay networks 10A-10D comprises four inputs 1-4 which are coupled to control signal lines 20, 21, 22 and 23, respectively, and four outputs coupled to corresponding inputs of the priority circuit 11. The inputs 1-4 are designated 1-4 to conveniently identify the CPU from which they are derived. For example, input 1 is derived from CPU 1, input 2 is derived from CPU 2, and so on. This identification scheme is also used with respect to the serialization circuit 14 and ACK receiver 16.

In the priority circuit 11 there is provided an output coupled to an output control signal line 24.

In the request register circuit 12 there is provided an input coupled to an output of the instruction processor 6 by means of a REQUEST control signal line 45, an output coupled to an input of the local serialization circuit 15 by means of a REQUEST LOCAL SERIALIZATION control signal line 46, an output coupled to an input of the order generator 13 by means of an ARBITRATION ONLY control signal line 47, an input coupled to an output of the order generator 13 by means of a DROP REQUEST control signal line 48, an output coupled to an input of the ARB/SER complete circuit 17 by means of an input SELECT control signal line 49 and an output coupled to one of the control signal lines 20-23.

In the order generator 13 there is also provided an input coupled to an output of the instruction processor 6 by means of a DROP ORDER control signal input line 50 and an output coupled to one of the ORDER control signal lines 27-30.

In the serialization circuit 14 there is provided three inputs coupled to three of the ORDER control signal lines 27-30, a fourth input coupled to an output of the instruction processor 6 by means of a control signal line 51 and an output coupled to one of the SERIALIZATION COMPLETE (ACK) control signal lines 35-38.

In the LOCAL SERIALIZATION circuit 15 there is also provided an input coupled to an output of the instruction processor 6 by means of a control signal line 52 and an output coupled to an input of the ARB/SER COMPLETE circuit 17 by means of a LOCAL SERIALIZATION COMPLETE control signal line 52.

In the ACK receiver 16 there is provided a plurality of three inputs coupled to three of the control signal lines 35-38 and an OTHER CPU's SERIALIZED control signal output coupled to an input of the circuit 17 by means of a control signal line 53.

In the ARB/SER circuit 17 there is also provided an output coupled to an input of the instruction processor 6 by means of control signal line 54.

In operation, when an instruction in the instruction processor 6 in one of the CPU's 1-4 requires another one of the CPU's 1-4 in the system to perform a specific operation, it requests permission to serialize the other CPU's, i.e. requests priority, by generating in its instruction processor 6 a REQUEST PERMISSION TO SERIALIZE OTHER CPU's control signal (REQUEST). The REQUEST is then transmitted by the CPU to the REQUEST register 12 on the line 45, and via the register 12, to its own priority circuit 11 and to the priority circuit 11 in each of the other CPU's via one of the control signal lines 20-23 and the delay networks 10A-10D associated therewith. For example, CPU 1 uses line 20, CPU 2 uses line 21, CPU 3 uses line 22 and CPU 4 uses line 23.

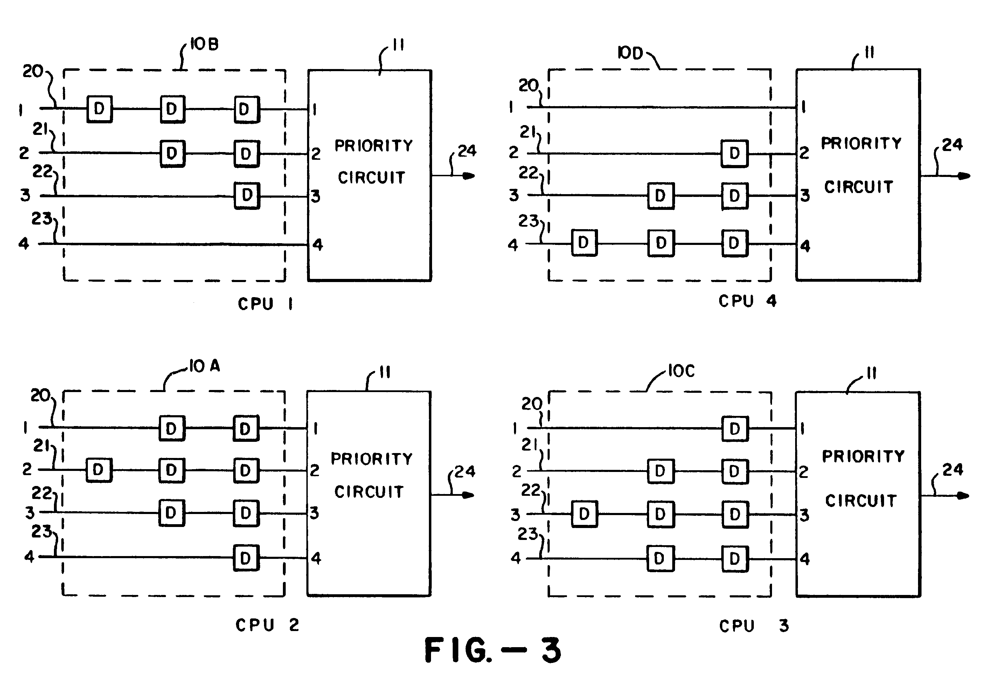

Referring to Fig. 3, the time it takes for each REQUEST to be received by a CPU depends on the relative location of the sending and receiving CPU's in the system and is characterized in terms of units of delay. If the sending and receiving CPU's are one and the same, there is obviously no delay. If the sending and receiving CPU's are coupled directly, there is 1 unit of delay. If the sending and receiving CPU's are separated by 1 CPU, there are 2 units of delay. If the sending and receiving CPU's are separated by 2 CPU's, there are 3 units of delay, etc.

For example, in the 4 CPU system described above with respect to Fig. 1, the units of delay are as follows:

## TABLE 1

| RECEIVER | SENDER | UNITS OF DELAY |
| --- | --- | --- |
| 1 | 1 | 0 |
| 1 | 2 | 1 |
| 1 | 3 | 2 |
| 1 | 4 | 3 |
| 2 | 1 | 1 |
| 2 | 2 | 0 |
| 2 | 3 | 1 |
| 2 | 4 | 2 |
| 3 | 1 | 2 |
| 3 | 2 | 1 |
| 3 | 3 | 0 |
| 3 | 4 | 1 |
| 4 | 1 | 3 |
| 4 | 2 | 2 |
| 4 | 3 | 1 |
| 4 | 4 | 0 |

The priority circuits in all of the CPU's are identical and each of them awards priority to itself or to another CPU in the system independently of the priority circuits in the other CPU's. Consequently, when two or. more CPU's simultaneously request priority, i.e. request permission to serialize the other CPU's in the system, it is necessary that all of the priority circuits receive the REQUESTS from the other CPU's simultaneously.

To make sure that all of the priority circuits in all of the CPU's receive the REQUESTS from the other CPU's simultaneously, delay circuits D are provided for delaying the REQUESTS received by the priority circuits from certain ones of the CPU's. The number of units of delay which is provided depends on the relative location of the sending and receiving CPU's in the system. Thus, if the sending and receiving CPU is one and the same, the number of units of delay provided is the maximum number of units of delay provided at any input of a priority circuit in a CPU in the system and is equal to the signal delay between a receiving CPU and the remotest sending CPU in the system. If the sending and receiving CPU's are coupled directly, the delay provided is 1 unit less than the maximum. If the sending and receiving CPU's are separated by one CPU, the delay provided is 2 units less than the maximum. If the sending and receiving CPU's are separated by 2 CPU's, the delay provided is 3 units less than the maximum, etc. For example, in the 4 CPU system described above with respect to Figs. 1 and 3, the delays provided are as follows:

TABLE 2

| RECEIVER | SENDER | UNITS OF DELAY |
|----------|--------|----------------|
| 1 | 1 | 3 |
| 1 | 2 | 2 |
| 1 | 3 | 1 |
| 1 | 4 | 0 |
| 2 | 1 | 2 |
| 2 | 2 | 3 |
| 2 | 3 | 2 |
| 2 | 4 | 1 |
| 3 | 1 | 1 |
| 3 | 2 | 2 |
| 3 | 3 | 3 |
| 3 | 4 | 2 |
| 4 | 1 | 0 |
| 4 | 2 | 1 |
| 4 | 3 | 2 |
| 4 | 4 | 3 |

Each of the above-described delay circuits D comprises one unit of delay.

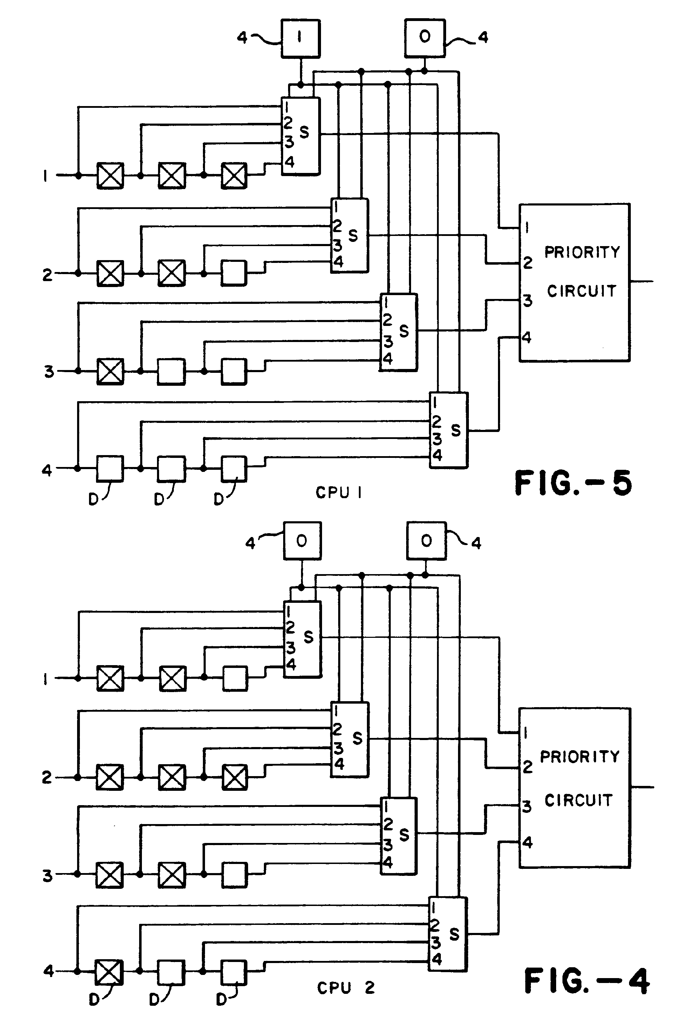

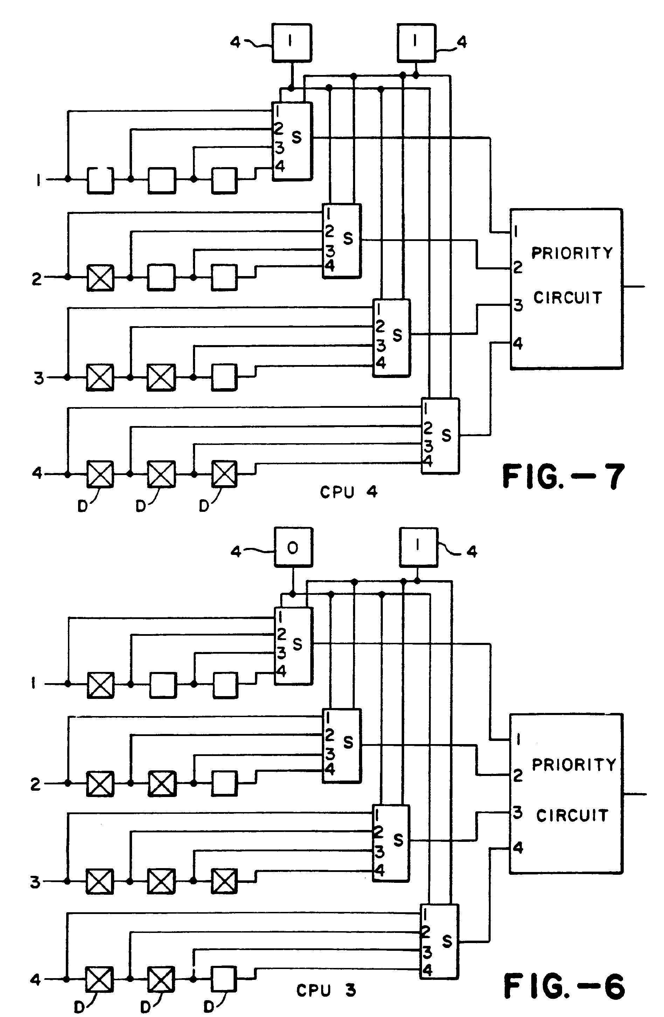

Referring to Figs. 4-7, in a preferred embodiment of the present invention, there is provided a plurality of programmable delay networks. Each of the networks can be easily programmed for placing the necessary amount of delay in series with each of the inputs of the priority circuit to which it is connected. Once the required maximum number of units of delay for any input of a priority circuit in the system is determined, each of the inputs to each of the priority circuits is provided with the maximum number of delay circuits D and a multi-input selector circuit S which is responsive to one or more latches L for coupling the required number of said delay circuits D in series with each such input. Thus, if an input to a priority circuit requires 3 units of delay, the selector circuit S in response to a control signal from the latches L will couple 3 of said delay circuits D in series with said input. If an input to another priority circuit requires 2 units of delay, the selector circuit S in response to another control signal from the latches will couple 2 of said delay circuits D in series with said input, etc.

For example, in the 4 CPU system described above with respect to Fig. 1, the inputs of the selector circuits for each receiver and sender combination are as follows:

6

| RECEIVER | CODE | SENDER | SELECTOR INPUTS |
|----------|------|--------|-----------------|
| 1 | 10 | 1 | 4 |
| 1 |    | 2 | 3 |
| 1 |    | 3 | 2 |
| 1 |    | 4 | 1 |
| 2 | 00 | 1 | 3 |
| 2 |    | 2 | 4 |
| 2 |    | 3 | 3 |
| 2 |    | 4 | 2 |
| 3 | 01 | 1 | 2 |
| 3 |    | 2 | 3 |
| 3 |    | 3 | 4 |
| 3 |    | 4 | 3 |
| 4 | 11 | 1 | 1 |
| 4 |    | 2 | 2 |
| 4 |    | 3 | 3 |
| 4 |    | 4 | 4 |

With identical priority, delay and selector circuits in each of the CPU's in the system, a CPU can be replaced by another CPU or exchanged with another CPU in the system and, from the foregoing description, it can be seen that all that is required to be done to accommodate the change is that the latches L controlling the selector circuits S therein be set to identify the location of the CPU in the system.

The setting of the latches L to identify the location of the CPU in the system may be done by means of a conventional keyboard coupled to the CPU, switches on the CPU or by means of appropriate electrical signals coupled through a connector to the CPU when the CPU is inserted in the system.

Continuing with the description of the operation of the system 1, upon the simultaneous receipt of a REQUEST from two or more of the CPU's in the system 1, the priority circuit 11 in all of the CPU's makes a decision awarding priority to one of the CPU's. Since all of the priority circuits 11 in the system are identical, the same decision is made by all of the priority circuits. Since the same decision is made by all of the priority circuits, the control signal awarding priority to a particular CPU does not have to be transmitted to the other CPU's, but is simultaneously available to all the CPU's in the system on the line 24.

After a CPU is awarded priority, and, if the instruction or group of instructions being executed by the requesting CPU awarded priority requires that the other CPU's be serialized, the CPU which is awarded priority generates and transmits a control signal, i.e. issues an order called SERIALIZE YOURSELF (ORDER), to all the other CPU's in the system on one of the lines 27-30 and thereafter drops its REQUEST. The REQUEST is dropped by means of a DROP REQUEST control signal generated by the order generator 13 which is sent to the request register 12 on the line 48. At the same time as the ORDER is sent to the other CPU's, the request register sends a REQUEST LOCAL SERIALIZATION control signal to the circuit 15 on the line 46 to cause the requesting CPU to serialize itself. After issuing the ORDER to all of the other CPU's in the system, the ordering CPU waits until it receives a SERIALIZATION COMPLETE (ACK) signal from all of the other CPU's in the system on the lines 35-38, which is indicated by a signal on the line 53, and a LOCAL SERIALIZATION COMPLETE signal from the circuit 15 on the line 52.

Both the circuit 14 and the circuit 15 receive inputs from the instruction processor 6 and the circuit 14 delivers inputs to the processor 6 in the course of performing the necessary serialization operations. Of course, the circuit 14 is used when an ORDER is received from another CPU and circuit 15 is used by the CPU issuing the ORDER. Also, the INPUT SELECT control signal on the line 49 causes the circuit 17 to select among its inputs on the lines 24, 52 and 53 depending on whether serialization of other CPU's or only arbitration is required.

When the ARB/SER COMPLETE circuit 17 receives the signals on the lines 52, 53 and 24, it sends a signal to the instruction processor 6 on the line 54. Thereafter, processor 6 completes the execution of the instruction or other operation which gave rise to the REQUEST and then drops the ORDER by sending a DROP ORDER control signal to the order generator 13 on the line 50.

As soon as a CPU which has been awarded priority and has issued an ORDER drops its REQUEST, a

7

second CPU in the system with a REQUEST pending, or newly generated, and then having the highest priority will be awarded priority in the manner described above. However, the second CPU will not issue an ORDER to the other CPU's until the first CPU drops its ORDER. The processing of the REQUEST of the second CPU and the awarding of priority thereto, even though the second CPU is not permitted to issue an ORDER until the pending ORDER has been dropped, results in an overlapping of operations and a significant savings in processing time especially when multiple simultaneous REQUESTS are made.

At this point, it should be noted that the making of a REQUEST by a CPU is not intended to imply that the requesting CPU always requires that the other CPU's be serialized. For example, a requesting CPU may require that the execution of a group of instructions be completed without interruption as might occur if another CPU made a REQUEST, was granted priority and issued an ORDER. In such a case, the instruction processor 6 sends a special REQUEST to the register 12 on the line 45. The register 12 then sends a REQUEST to its priority circuit 11 and the priority circuit 11 in the other CPU's and an ARBITRATION ONLY control signal to its order generator 13 for preventing the generation of an ORDER, if the CPU is awarded priority. Thereafter, if the requesting CPU is awarded priority, the instruction processor 6 causes the request generator 12 to hold the REQUEST until the group of instructions involved is executed. By holding its REQUEST, the requesting CPU effectively prevents any other CPU from obtaining priority.

While two embodiments of the present invention are described above, it is contemplated that various modifications may be made to the embodiments described. For example, while a multiprocessor system comprising four CPU's is described, other systems comprising more or less than four CPU's may be made with the present invention.

## Claims

1. A control apparatus in each distributed central processing unit (CPU) within a distributed multiprocessor system comprising a plurality of distributed CPUs which process data in response to instructions, said control apparatus comprising:

    request means (12) responsive to a predetermined instruction for generating a REQUEST signal to request serialization of all said distributed CPUs;

    transmitting means (20) connected to said request means for transmitting said REQUEST signal to all other said distributed CPUs; and

    priority means (11) connected to receive REQUEST signals generated by all said distributed CPUs for awarding priority to one of said REQUEST signals when a plurality of REQUEST signals are simultaneously received by said priority means;

    characterized by further comprising receiving means (10) having

    a plurality of inputs (20, 21, 22, 23) where each input receives REQUEST signals from a respective one of said distributed CPUs,

    delay means connected to said inputs for compensating for the transmission times associated with transmitting REQUEST signals from the respective transmitting distributed CPUs, said delay means comprising a plurality of delays each of a multiple of one unit of delay; and selector means for coupling in series with each of said inputs a predetermined number of said delays such that the number of units of delay in series with each input is inversely proportional to the amount of time for transmitting a REQUEST signal from the respective distributed CPU to that one of said plurality of said inputs; and

    a plurality of outputs where each output is connected to a respective one of said inputs via said delay means and to said priority means; whereby REQUEST signals appearing at said outputs of said receiving means are in the same time relationship as that in which said REQUEST signals were generated by said distributed CPUs.

2. The control apparatus of Claim 1 further comprising:

    order means (13) responsive to an award of priority to the distributed CPU containing said control apparatus for generating an ORDER signal (28) to request that each other said distributed CPU perform a serialization operation;

    local means (14, 15) responsive to a LOCAL signal to request said distributed CPU issuing said ORDER to perform a local serialization operation and generating a COMPLETE signal when said local serialization operation has been completed;

    order transmitting means for transmitting said ORDER signal to all other said distributed CPUs;

    reset means (12) responsive to said generation of said ORDER signal for dropping said REQUEST signal generated by said distributed CPU generating said ORDER signal;

order receiving means (14) for receiving ORDERS transmitted from all other said distributed CPUs, for performing a serialization operation in response to said received ORDER signal and for generating and transmitting an ACK signal (35) to all other said distributed CPUs upon completion of said serialization operation;

acknowledge receiving means (16) for receiving said ACK signal from each of said other distributed CPUs and for generating a DONE signal when an ACK signal has been received from each of said other distributed CPUs in response to said ORDER signal issued by said distributed CPU that issued said ORDER signal; and

completion means (17) responsive to DONE signal and said COMPLETE signal (52) for completing said predetermined instruction and for dropping said ORDER signal after completing said predetermined instruction.

3. The control apparatus of Claim 2 wherein said request means further comprises:

hold means, responsive to an instruction requiring the execution of a predetermined operation without interruption and without serializing of said other distributed CPUs, for holding said REQUEST signal once priority is granted to said distributed CPU to prevent any other said distributed CPUs from being granted priority until after completion of the execution of said predetermined operation.

4. A method of arbitration between requests for serialization of a plurality of distributed central processing units, CPUs, in a multiprocessor system in which each of said CPUs comprises a priority means having a plurality of inputs and a request means responsive to an instruction for generating a REQUEST signal to request serialization of said distributed CPUs, said method comprising the steps of:

transmitting each said REQUEST signal generated by a said distributed CPU to all other said distributed CPUs; and

awarding priority by each said priority means to the same said REQUEST signal from a plurality of simultaneously received REQUEST signals;

characterized by further comprising the step of delaying said transmitted REQUEST signals received in each said distributed CPU to compensate for the time of transmission of said REQUEST signal from each other said distributed CPU to the receiving said distributed CPU so as to maintain the time relationship between received said REQUEST signal to be the same as when said REQUEST signals were originally transmitted by said other distributed CPU when received at said priority means in said receiving distributed CPU by providing in each said distributed CPU for each distributed CPU delay means for delaying a said REQUEST signal prior to said REQUEST signals being received by said priority means and selectively coupling in series a predetermined number of delays each being of a multiple of one unit of delay, such that the number of units of delay in series is inversely proportional to the transmission time for transmitting said REQUEST signal from a said transmitting distributed CPU to a said receiving distributed CPU.

5. The method of Claim 4 further comprising the steps of:

generating in said distributed CPU having priority an ORDER signal requesting all other said distributed CPUs to perform a serialization operation;

performing a local serialization operation in said distributed CPU generating said ORDER signal;

transmitting said ORDER signal to all other said distributed CPUs;

executing by each said distributed CPUs in response to said ORDER signal a serialization operation;

generating an ACK signal by each said other distributed CPU upon completion of said serialization operation by said other distributed CPU;

transmitting said ACK signal by each said other distributed CPU to said distributed CPU generating said ORDER signal;

dropping said REQUEST signal in said distributed CPU generating said ORDER signal upon generating said ORDER signal;

completing the instruction in said distributed CPU having priority; and

dropping said ORDER signal in said distributed CPU having priority in response to receipt of said ACK signal from each of said other distributed CPUs and upon the completion of said local serialization operation in said distributed CPU having priority.

6. The method of Claim 5 further comprising the step of:

holding, in response to an instruction requiring execution of a predetermined operation without interruption and without serializing said other distributed CPUs, said REQUEST signal in said distributed CPU having priority to prevent any said other distributed CPU from being granted priority until after completion of execution of said predetermined operation.

## Patentansprüche

1. Steuervorrichtung in jeder verteilten Zentralverarbeitungseinheit (central processing unit-CPU) in einem verteilten Multiprozessorsystem, das eine Vielzahl verteilter CPU's umfaßt, die Daten in Reaktion auf Befehle verarbeiten, wobei die Steuervorrichtung umfaßt:
eine Aufforderungseinrichtung (12), die auf einen vorgegebenen Befehl anspricht und ein AUFFORDERUNG-Signal erzeugt, das zur Serialisierung aller verteilten CPU's auffordert;
eine Übertragungseinrichtung (20), die mit der Aufforderungseinrichtung verbunden ist, und das AUFFORDERUNG-Signal zu allen anderen verteilten CPU's überträgt; und
eine Prioritätseinrichtung (11), die so angeschlossen ist, daß sie durch alle verteilten CPU's erzeugte AUFFODERUNG-Signale empfängt und einem der AUFFORDERUNG-Signale Priorität erteilt, wenn eine Vielzahl von AUFFORDERUNG-Signalen gleichzeitig durch die Prioritäseinrichtung empfangen wird;
**dadurch gekennzeichnet**, daß sie des weiteren eine Empfangseinrichtung (10) umfaßt, die aufweist:
eine Vielzahl von Eingängen (20, 21, 22, 23), wobei jeder Eingang AUFFORDERUNG-Signale von einer entsprechenden der verteilten CPU's empfängt,
mit den Eingängen verbundene Verzögerungseinrichtungen, die die mit den AUFFORDERUNG-Signalen von den entsprechenden übertragenden verteilenden CPU's verbundenen Übertragungszeiten ausgleichen, wobei die Verzögerungseinrichtungen eine Vielzahl von Verzögerungen umfassen, die jeweils ein Vielfaches einer Verzögerungseinheit sind; und eine Selektoreinrichtung, die eine vorgegebene Anzahl der Verzögerungen in Reihe mit jedem der Eingänge verbindet, so daß die Anzahl von Verzögerungseinheiten in Reihe mit jedem Eingang zu dem Betrag der Zeit zur Übertragung eines AUFFORDERUNG-Signals von der entsprechenden verteilten CPU zu einem der Vielzahl von Eingängen umgekehrt proportional ist; und
eine Vielzahl von Ausgängen, wobei jeder Ausgang über die Verzögerungseinrichtungen mit einem entsprechenden der Eingänge und der Prioritätseinrichtung verbunden ist; wobei AUFFORDERUNG-Signale, die an den Ausgängen der Empfangseinrichtung auftreten, im gleichen zeitlichen Verhältnis stehen, in dem die AUFFORDERUNG-Signale durch die verteilten CPU's erzeugt wurden.

2. Steuervorrichtung nach Anspruch 1, die des weiteren um faßt:
eine Befehlseinrichtung (13), die auf eine Erteilung von Priorität für die verteilte CPU, die die Steuervorrichtung enthält, anspricht und ein BEFEHL-Signal (28) erzeugt, das dazu auffordert, daß jede andere verteilte CPU eine Serialisationsoperation ausführt;
eine Lokaleinrichtung (14, 15), die auf ein LOKAL-Signal anspricht und die verteilte CPU, die den Befehl ausgibt, auffordert, eine lokale Serialisationsoperation auszuführen, um ein AUSGEFÜHRT-Signal zu erzeugen, wenn die lokale Serialisationsoperation ausgeführt worden ist;
eine Befehlsübertragungseinrichtung, die das BEFEHL-Signal zu allen anderen verteilten CPU's überträgt;
eine Rücksetzeinrichtung (12), die auf die Erzeugung des BEFEHL-Signals anspricht, um das von der das BEFEHL-Signal erzeugenden verteilten CPU erzeugte AUFFORDERUNG-Signal fallenzulassen;
Befehlsempfangseinrichtung (14), die von allen anderen verteilten CPU's übertragene BEFEHLE empfängt, und in Reaktion auf das empfangene BEFEHL-Signal eine Serialisationsoperation ausführt und nach Ausführung der Serialisationsoperation ein ACK-Signal (35) erzeugt und zu allen anderen verteilten CPU's überträgt;
Bestätigungsempfangseinrichtung (16), die das ACK-Signal von jeder der anderen verteilten CPU's empfängt und ein ERLEDIGT-Signal erzeugt, wenn in Reaktion auf das BEFEHL-Signal, das von der verteilten CPU, die das BEFEHL-Signal ausgegeben hat, ausgegeben wurde, ein ACK-Signal von jeder der anderen verteilten CPU's empfangen wurde, und
eine Ausführungseinrichtung (17), die auf das ERLEDIGT-Signal und das AUSGEFÜHRT-Signal (52) anspricht und den vorgegebenen Befehl ausführt und nach der Ausführung des vorgegebenen Befehls das BEFEHL-Signal fallenläßt.

3. Steuervorrichtung nach Anspruch 2, wobei die Aufforde rungseinrichtung des weiteren umfaßt:
eine Halteeinrichtung, die auf einen Befehl anspricht, der zur Ausführung einer vorgegebenen Operation ohne Unterbrechung und ohne Serialisierung der anderen verteilten CPUs auffordert, und die das AUFFORDERUNG-Signal hält, wenn der verteilten CPU Priorität erteilt worden ist, um zu verhindern, daß anderen verteilten CPU's vor der vollständigen Ausführung der vorgegebenen Operation Priorität erteilt wird.

4. Verfahren der Entscheidung zwischen Aufforderungen zur Serialisierung einer Vielzahl verteilter Zentralverarbeitungseinheiten (CPU's) in einem Multiprozessorsystem, wobei jede der CPU's eine Prioritätseinrichtung mit einer Vielzahl von Eingängen sowie eine Aufforderungseinrichtung umfaßt, die auf einen Befehl zur Erzeugung eines AUFFORDERUNG-Signals anspricht, um zur Serialisierung der verteilten CPU's aufzufordern, wobei das Verfahren die folgenden Schritte umfaßt:
Übertragen jedes durch die verteilte CPU erzeugten AUFFORDERUNG-Signals zu allen anderen verteilten CPU's; und
Erteilen von Priorität durch jede der Prioritätseinrichtungen für das gleiche AUFFORDERUNG-Signal aus einer Vielzahl von gleichzeitig empfangenen AUFFORDERUNG-Signalen;
**dadurch gekennzeichnet,** daß es des weiteren den Schritt der Verzögerung der übertragenen AUFFORDERUNG-Signale umfaßt, die in jeder verteilten CPU empfangen worden sind, um die Zeit der Übertragung des AUFFORDERUNG-Signals von jeder anderen verteilten CPU zu der empfangenden verteilten CPU auszugleichen, so daß das zeitliche Verhältnis zwischen dem empfangenen AUFFORDERUNG-Signal das gleiche ist, als wenn die AUFFORDERUNG-Signale ursprünglich von der anderen verteilten CPU übertragen worden wären, wenn sie an der Prioritätseinrichtung in der empfangenden verteilten CPU empfangen werden, indem in jeder verteilten CPU für jede verteilte CPU eine Verzögerungseinrichtung vorhanden ist, die ein AUFFORDERUNG-Signal verzögert, bevor die AUFFORDERUNG-Signale von der Prioritätseinrichtung empfangen werden und eine vorgegebene Anzahl von Verzögerungen, die jeweils ein Vielfaches einer Verzögerungseinheit sind, wahlweise in Reihe verbindet, so daß die Anzahl von Verzögerungseinheiten in Reihe zu der Übertragungszeit zur Übertragung des AUFFORDERUNG-Signals von einer übertragenden verteilten CPU zu einer empfangenden verteilten CPU umgekehrt proportional ist.

5. Verfahren nach Anspruch 4, das des weiteren die folgenden Schritte umfaßt:
Erzeugen eines BEFEHL-Signals in der verteilten CPU, die Priorität hat, das alle anderen verteilten CPU's zur Ausführung einer Serialisierungsoperation auffordert;
Ausführen einer lokalen Serialisierungsoperation in der verteilten CPU, die das BEFEHL-Signal erzeugt;
Übertragen des BEFEHL-Signals zu allen anderen verteilten CPU's;
Ausführen einer Serialisierungsoperation durch jede der verteilten CPU's in Reaktion auf das BEFEHL-Signal;
Erzeugen eines ACK-Signals durch jede andere verteilte CPU nach Ausführung der Serialisierungsoperation durch die andere verteilte CPU;
Übertragen des ACK-Signals durch jede andere verteilte CPU zu der das BEFEHL-Signal erzeugenden verteilten CPU;
Fallenlassen des AUFFORDERUNG-Signals in der das BEFEHL-Signal erzeugenden verteilten CPU nach Erzeugung des BEFEHL-Signals;
Ausführen des Befehls in der verteilten CPU, die Priorität hat; und
Fallenlassen des BEFEHL-Signals in der verteilten CPU, die Priorität hat, in Reaktion auf den Empfang des ACK-Signals von jeder der anderen verteilten CPU's und nach der Ausführung der lokalen Serialisierungsoperation in der verteilten CPU, die Priorität hat.

6. Verfahren nach Anspruch 5, das des weiteren den folgenden Schritt umfaßt:
Halten des AUFFORDERUNG-Signals in der verteilten CPU, die Priorität hat, in Reaktion auf einen Befehl, der zur Ausführung einer vorgegebenen Operation ohne Unterbrechung und ohne Serialisierung der anderen verteilten CPU's auffordert, um zu verhindern, daß der anderen verteilten CPU vor der vollständigen Ausführung der vorgegebenen Operation Priorität erteilt wird.

## Revendications

1. Dispositif de commande, dans chaque unité centrale de traitement (CPU) repartie, à l'intérieur d'un système multiprocesseur réparti, comprenant une pluralité de CPU réparties qui traitent des données en réponse à des instructions, ledit dispositif de commande comprenant :
un moyen de demande (12) sensible à une instruction prédéterminée pour produire un signal de

EP 0 259 135 B1

demande pour demander la sérialisation de toutes les CPU réparties ;

un moyen de transmission (20) connecté audit moyen de demande pour transmettre ledit signal de demande à toutes les autres dites CPU réparties ; et,

un moyen de priorité (11) raccordé pour recevoir les signaux de demande produits par toutes lesdites CPU réparties pour donner la priorité à l'un desdits signaux de demande lorsque plusieurs signaux de demande sont reçus simultanément par ledit moyen de priorité ;

caractérisé en ce qu'il comprend en outre un moyen de réception (10) comportant :

une pluralité d'entrées (20, 21, 22, 23), chaque entrée recevant des signaux de demande provenant de l'une respectives desdites CPU réparties ;

un moyen de retardement connecté auxdites entrées pour compenser les délais de transmission associés à la transmission des signaux de demande à partir des CPU émettrices respectives, ledit moyen de retardement comprenant une pluralité d'éléments retardateurs chacun d'un multiple d'une unité de retardement ; et un moyen de sélection pour connecter en série avec chacune desdites entrées un nombre prédéterminé desdits éléments retardateurs, de sorte que le nombre d'unités de retardement en série avec chaque entrée est inversement proportionnel au temps de transmission d'un signal de demande de la CPU répartie respective à celle qui est concernée de ladite pluralité desdites entrées ; et,

une pluralité de sorties, chaque sortie étant connectée à l'une respective desdites entrées, par l'intermédiaire dudit moyen de retardement, et audit moyen de priorité ; ce par quoi les signaux de demande apparaissant auxdites sorties dudit moyen de réception sont dans la même relation temporelle que celle dans laquelle lesdits signaux de demande ont été produits par lesdites CPU réparties.

2. Dispositif de commande selon la revendication 1, comprenant en outre :

un moyen générateur d'ordres (13), sensible à une attribution de priorité à la CPU répartie contenant ledit dispositif de commande, pour produire un signal d'ordre (28) pour demander à chacune des autres dites CPU réparties d'effectuer une opération de sérialisation ;

un moyen local (14, 15) sensible à un signal de traitement local pour demander, à ladite CPU répartie émettant ledit ordre, d'effectuer une opération de sérialisation locale et de produire un signal d'achèvement lorsque ladite opération de sérialisation locale a été achevée ;

un moyen de transmission d'ordre pour transmettre ledit signal d'ordre à toutes les autres dites CPU réparties ;

un moyen de remise à zéro (12) sensible à ladite production dudit signal d'ordre pour supprimer ledit signal de demande produit par ladite CPU répartie produisant ledit signal d'ordre ;

un moyen de réception d'ordre (14) pour recevoir des ordres émis à partir de toutes les autres dites CPU réparties, pour effectuer une opération de sérialisation en réponse audit signal d'ordre reçu, et pour produire et émettre, à la fin de ladite opération de sérialisation, un signal d'accusé de réception (35) vers toutes lesdites autres CPU réparties ;

un moyen de réception d'accusé de réception (16) pour recevoir ledit signal d'accusé de réception provenant de chacune desdites autres CPU réparties et pour produire un signal de fin d'exécution lorsqu'un signal d'accusé de réception a été reçu de chacune desdites autres CPU réparties en réponse audit signal d'ordre émis par ladite CPU répartie qui a émis ledit signal d'ordre ; et,

un moyen d'achèvement (17) sensible au signal de fin d'exécution et audit signal d'achèvement (52) pour achever ladite instruction prédéterminée et pour supprimer ledit signal d'ordre après achèvement de ladite instruction prédéterminée.

3. Dispositif de commande selon la revendication 2, dans lequel ledit moyen de demande comprend en outre :

un moyen de maintien, sensible à une instruction demandant l'exécution d'une opération prédéterminée sans interruption et sans sérialisation desdites autres CPU réparties, pour maintenir ledit signal de demande une fois que la priorité a été donnée à ladite CPU répartie pour empêcher n'importe quelle autre desdites CPU réparties de se voir donner la priorité jusqu'après l'achèvement de l'exécution de ladite opération prédéterminée.

4. Procédé d'arbitrage entre des demandes de sérialisation d'une pluralité d'unités centrales de traitement, CPU, réparties dans un système multiprocesseur dans lequel chacune desdites CPU comprend un moyen de priorité possédant une pluralité d'entrées et un moyen de demande sensible à une instruction pour produire un signal de demande pour demander la sérialisation desdites CPU réparties, ledit procédé comprenant les étapes :

de transmission de chacun desdits signaux de demande, produits par l'une desdites CPU réparties, à toutes les autres dites CPU réparties ; et

d'attribution de la priorité, par chacun desdits moyens de priorité, au même dit signal de demande parmi une pluralité de signaux de demande reçus simultanément ;

caractérisé en ce qu'il comprend en outre l'étape de retardement desdits signaux de demande transmis, reçus dans chacune desdites CPU réparties, pour compenser le temps de transmission dudit signal de demande, provenant de chacune des autres dites CPU réparties, à ladite CPU répartie réceptrice de manière à conserver la relation temporelle entre lesdits signaux de demande reçus pour qu'elle soit la même que lorsque lesdits signaux de demande ont été émis à l'origine par lesdites autres CPU réparties, lorsqu'ils sont reçus audit moyen de priorité dans ladite CPU répartie réceptrice, en prévoyant dans chacune desdites CPU réparties, pour chaque CPU répartie, un moyen de retardement pour retarder un signal de demande antérieur auxdits signaux de demande qui sont reçus par ledit moyen de priorité, et pour connecter, en série, de manière sélective, un nombre prédéterminé d'éléments de retardement qui sont chacun d'un multiple d'une unité de retardement, de sorte que le nombre d'unités de retardement en série est inversement proportionnel au temps de transmission pour transmettre ledit signal de demande d'une dite CPU répartie émettrice à une dite CPU répartie réceptrice.

5. Procédé selon la revendication 4, comprenant en outre les étapes :

de production dans ladite CPU répartie ayant la priorité d'un signal d'ordre demandant à toutes les autres dites CPU réparties d'effectuer une opération de sérialisation ;

d'exécution d'une opération de sérialisation locale dans ladite CPU répartie produisant ledit signal d'ordre ;

de transmission dudit signal d'ordre à toutes les autres dites CPU réparties ;

d'exécution d'une opération de sérialisation, par chacune desdites CPU réparties, en réponse audit signal d'ordre ;

de production d'un signal d'accusé de réception, par chacune desdites autres CPU réparties, lors de l'achèvement de ladite opération de sérialisation par ladite autre CPU répartie ;

de transmission dudit signal d'accusé de réception, par chacune desdites autres CPU réparties, à ladite CPU répartie produisant ledit signal d'ordre ;

de suppression dudit signal de demande dans ladite CPU répartie produisant ledit signal d'ordre, lors de la production dudit signal d'ordre ;

d'achèvement de l'instruction dans ladite CPU répartie ayant la priorité ; et,

de suppression dudit signal d'ordre dans ladite CPU répartie ayant la priorité, en réponse à la réception dudit signal d'accusé de réception provenant de chacune desdites autres CPU réparties et lors de l'achèvement de ladite opération de sérialisation locale dans ladite CPU répartie ayant la priorité.

6. Procédé selon la revendication 5, comprenant en outre l'étape :

de maintien, en réponse à une instruction demandant l'exécution d'une opération prédéterminée, sans interruption et sans sérialisation desdites autres CPU réparties, dudit signal de demande dans ladite CPU répartie ayant la priorité pour empêcher n'importe laquelle desdites autres CPU réparties de se voir donner la priorité jusqu'après l'achèvement de l'exécution de ladite opération prédéterminée.

FIG.—1

EP 0 259 135 B1

FIG.—2

15

FIG. — 3

**FIG.—5**

**FIG.—4**

FIG. — 7

CPU 4

FIG. — 6

CPU 3

18